# EUROPÄISCHE PATENTSCHRIFT

(11) **EP 1 566 257 B1**
(45) Veröffentlichungstag und Bekanntmachung des Hinweises auf die Patenterteilung: **05.10.2011**
(21) Anmeldenummer: 04026940.9
(22) Anmeldetag: 12.11.2004
(51) Int. Cl.: B29C 47/90

(54) **Kalibrierkorb für eine Rohr-Kalibrierstation und Kalibrierverfahren**
Calibrating cage for tube calibration device and calibrating method
Cage de calibrage pour un dispositif de calibrage de tubes et procédé de calibrage

(30) Priorität: 21.02.2004 DE 102004008620
(43) Veröffentlichungstag der Anmeldung: 24.08.2005
(73) Patentinhaber: egeplast Werner Strumann GmbH & Co. KG, 48268 Greven (DE)
(72) Erfinder: Ulrich, Herbert, 48282 Emsdetten (DE)
(74) Vertreter: Fritz & Brandenburg Patentanwälte

(56) Entgegenhaltungen:
- EP-A- 1 157 805
- EP-A- 1 188 541
- DE-A1- 3 243 140
- DE-A1- 10 206 276
- DE-A1- 19 843 340
- GB-A- 670 708

## Beschreibung

Die Erfindung bezieht sich auf einen Kalibrierkorb für eine Kalibrierstation gemäß dem Oberbegriff des Hauptanspruches.

In der DE 198 43 340 C2 wird eine Vorrichtung zur Herstellung von Kunststoffrohren beschrieben, die mit einer Kalibrierstation, gemäß dem Oberbegriff des Anspruchs 1, ausgerüstet ist. Die Kalibrierwerkzeuge werden innerhalb der Kalibrierstation durch eine Vielzahl von Lamellen gebildet, die über den Umfang des zu kali-brierenden Rohres aufeinanderfolgend im Abstand voneinander verteilt angeordnet sind, wobei auch in Produktionsrichtung des Rohres gesehen eine Vielzahl solcher Lamellenkränze vorge-sehen werden. In der Kalibrierstation erfolgt durch eine mechanische, hydraulische oder elektrische Zentralverstellung das genaue Kalibrieren des Außendurchmessers des Schmelzestranges und des schon teilweise ausgehärteten Rohres.

Die Herstellung und der Einbau der Vielzahl von Lamellen in der Kalibrierstation ist material-und arbeitsaufwendig.

Bei größeren Rohrdurchmessern ist die Ziehgeschwindigkeit des Rohres entsprechend niedriger, so dass das Rohr die Kalibrierstation langsamer durchläuft und somit für einen längeren Zeitraum hier verbleibt, wodurch es zu einer Verformung zwischen den einzelnen Lamellen kommen könnte.

Aus der DE 32 43 140 A1 ist ein Verfahren zur Kalibrierung eines Kunststoffrohres bekannt, mit einem in einer Kalibrierstation drehbar angeordneten Kalibrierkorb. Zwar ist in dieser Druckschrift eine rohrunterstützende Kalibrierhülse offenbart, jedoch sind keine Kalibrierleisten vorhanden, die sich in Längsrichtung des zu kalibrierenden Rohres erstrecken.

Der Erfindung liegt die Aufgabe zugrunde, eine Kalibrierstation zu schaffen, die wesentlich kostengünstiger als die bisher bekannten Konstruktionen ausgebildet ist und die eine Unterstützung des zu kalibrierenden Rohres in Produktionsrichtung des Rohres gesehen über einen längeren Weg kontinuierlich ermöglicht.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt wird vorgeschlagen, dass im Unterschied zu dem im Stand der Technik bekannten Kalibrierlamellen, die Kalibrierwerkzeuge als sich in Längsrichtung des zu kalibrierenden Rohres erstreckende Kalibrierleisten ausgebildet sind, die an Verstellspindeln radial einstellbar angeordnet sind und je eine mit dem Rohr in Kontakt kommende Gleitfläche aufweisen, wobei innerhalb der Kalibrierleiste Ausnehmungen vorgesehen sind, die mit einer in der Gleitfläche vorgesehenen, in Längsachse der Kalibrierleiste verlaufenden Austrittsöffnung in Verbindung stehen, gemäß dem Kennzeichnenden Teil des Anspruchs 1. In die Ausnehmungen wird Wasser bzw. Vakuum eingeführt, wobei dieses Wasser und das Vakuum durch die Austrittsöffnung auf die Außenseite des zu kalibrierenden Rohres wirkt. Das Wasser wirkt dabei wie ein Schmierfilm und als Kühlmittel für die Kalibrierleiste.

Zusätzlich ist in der Kalibrierstation ein Vakuum bzw. ein Überdruck einstellbar, dadurch, daß die Kalibrierstation mit der im Stand der Technik bekannten, vor der Kalibrierstation angeordneten Vakuumsaug- bzw. Druckglocke in Verbindung steht.

Das Vakuum, das in der Kalibrierleiste eingestellt wird, wird durch einen Anschluß des Inneren der Kalibrierleiste mit dem Inneren des auf die Kalibrierstation folgenden Vakuumkalibrierbades sichergestellt.

Zusätzlich können die Kalibrierleisten mit in den Seitenwänden mündenden Wasserkanälen ausgerüstet sein, die ebenfalls Wasser auf die Oberseite des zu kalibrierenden Rohres führen, wobei dieses Wasser als Schmierfilm und als Abdichtung wirkt. Der Kalibrierkopf ist in der Kalibrierstation drehbar gelagert und führt eine Rotation um das zu kalibrierende Rohr aus. Das Vakuum in dem auf die Kalibrierstation im Stand der Technik folgenden Kalibrierbad beträgt etwa 250 - 500 mbar, und dieses hohe Vakuum wirkt über eine entsprechende Zutrittsöffnung in das Innere der Kalibrierleiste, wobei zusätzlich die Kalibrierleiste eine Druckregelbohrung aufweisen kann, mit der dieses Vakuum nunmehr in Anpassung an das jeweilige Material des Kunststoffrohres einregelbar ist.

Das Vakuum in der Saugglocke beträgt etwa bis 50 mbar und der Überdruck in der Druckglocke kann etwa 0 - 100 mbar betragen.

Die Abdichtung des eigentlichen Kalibrierkorbes gegenüber dem Inneren des Vakuumkalibrierbades erfolgt gemäß der Erfindung vorzugsweise über eine Blendendichtung, d. h. also über Blenden, die sich überlappend angeordnet sind und vorzugsweise mit Wasser besprüht werden, wodurch die Dichtigkeit der Blende weiter erhöht wird.

Mit der Kalibrierleiste ist jeweils eine Blendenlamelle fest verbunden und alle Blendenlamellen werden in Abhängigkeit der Verstellung der Kalibrierleiste ebenfalls entsprechend verstellt.

Die Erfindung bezieht sich weiterhin auf ein Verfahren gemäß Anspruch 15, zur Kalibrierung eines Kunststoffrohres mit einem in einer Kalibrierstation drehbar angeordneten Kalibrierkorb, der sich in Längsrichtung des zu kalibrierenden Rohres erstreckende Kalibrierleisten aufweist, wobei die Kalibrierung des Rohres im Kontaktbereich des Rohres mit den Kalibrierleisten und der Zugabe von Wasser und unter der Einwirkung von Vakuum erfolgt.

Die Erfindung betrifft dabei - wie im gattungsbildenden Stand der Technik - ein Verfahren zur Herstellung von Kunststoffrohren, in der automatisch eine Umstellung der Extrusionslinie ohne Produktionsunterbrechung erfolgt, wobei Außendurchmesser und Wanddicke des Rohres in Abhängigkeit von einem Sollwert eingestellt werden und wobei der Düsenspalt eines Rohrkopfes und die Kalibriervorrichtung in Abhängigkeit von diesem Sollwert eingestellt werden.

Zusätzlich zu dem auf der Gleitfläche der Kalibrierleiste auf das zu kalibrierende Rohr wirkenden Wasser bzw. Vakuum ist vorgesehen, daß auch eine Wasserzuführung im Bereich der Seitenwände der Kalibrierleisten erfolgt, wobei das Wasser bei der Rotation des Kalibrierkorbes auf die Außenseite des unter die Kalibrierleiste einlaufenden Rohres bzw. auf die Außenseite des von der Kalibrierleiste ablaufenden Rohres aufgebracht wird.

Ein Ausführungsbeispiel der Erfindung wird nachfolgend anhand der Zeichnung erläutert. Die Zeichnungen zeigen dabei in
- Fig. 1: eine Gesamtansicht einer Produktionseinrichtung, in
- Fig. 2: eine Schnittdarstellung durch die Kalibrierstation, in
- Fig. 3: in größerem Maßstab den Aufbau der Kalibrierstation, in
- Fig. 4: in ebenfalls größerem Maßstab eine Kalibrierleiste im Schnitt und in
- Fig. 5: eine Ansicht in Produktionsrichtung des Rohres auf eine Kalibrierleiste mit den zugeordneten Blenden.

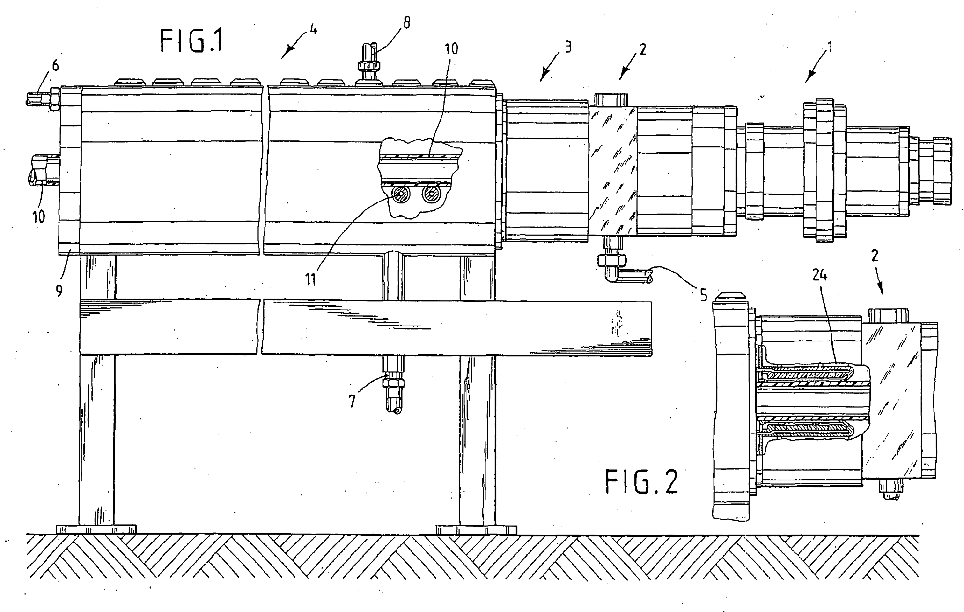

In Fig. 1 ist bei 1 ein verstellbarer Rohrkopf angeordnet, der in Produktionsrichtung gesehen an einen in der Zeichnung nicht dargestellten Extruder anschließt. An den verstellbaren Rohrkopf 1 schließt sich eine Vakuumsaug- oder Druckglocke 2 an, die mit einem Vakuum- oder Druckanschluß 5 ausgerüstet ist und in der Meßvorrichtungen vorgesehen sind, die in Abhängigkeit des gewünschten Rohraußendurchmessers das in der Glocke herrschende Vakuum oder den Druck einstellen, so daß dadurch der rohrförmige Schmelzestrom auf den gewünschten Außendurchmesser eingestellt wird, d. h. aufgesaugt oder eingedrückt wird. In der Vakuumsaug- oder Druckglocke 2 erfolgt bereits eine Vorkühlung des Schmelzestranges und in der Glocke 2 kann in Verbindung mit dem verstellbaren Rohrkopf 1 auch eine genaue Rohrwanddicke eingestellt werden, wobei die Rohrwanddicke in Abhängigkeit des Außendurchmessers des Rohres variiert werden kann.

An die Vakuumsaug- bzw. Druckglocke 2 schließt sich eine Kalibrierstation 3 an, in der ein Kalibrierkorb 24 drehbar angeordnet ist. Hier erfolgt durch eine mechanische Zentralverstellung das genaue Kalibrieren des Außendurchmessers des Schmelzestranges und des schon teilweise ausgehärteten Rohres 10, wobei diese Kalibrierstation 3 für alle in Frage kommenden Kunststoffe einsetzbar ist. In dieser Kalibrierstation 3 können mehrere Dimensionen auch mit den unterschiedlichen Wanddicken eingestellt werden.

In einem sich in Produktionsrichtung gesehen daran anschlie-βenden Vakuumkalibrierbad 4 erfolgt dann das Auskühlen und Aushärten des Kunststoffrohres durch Sprühwasser, wobei in der Zeichnung ein Wasserzulauf 6 und ein Wasserabfluß 7 erkennbar ist. Weiterhin schließt an das Vakuum-Kalibrierbad 4 ein Vakuumanschluß 8 an und das sich in dem Vakuumkalibrierbad 4 befindende Rohr 10 läuft über Stützrollen 11, die auch als Kalibrierrollen bezeichnet werden können und sich auf den gewünschten Rohrdurchmesser einstellen lassen. Die Oberfläche des Rohres 10 ist relativ hart und das Rohr 10 verläßt das Vakuum-Kalibrierbad 4 durch eine Vakuumabdichtung 9, die sich entweder selbständig auf den Rohrdurchmesser einstellt oder in Abhängigkeit der eingestellten Rohrdimensionen in der Kalibrierstation 3 und/oder im Vakuumkalibrierbad 4 eingestellt wird. In der Vakuumabdichtung 9 können Formrollen angeordnet sein, die hydraulisch oder durch mechanische Federn betätigt werden, wobei gleichzeitig hier in den Durchlauf des Rohres Wasser zur Schmierung und Abdichtung eingeführt werden kann.

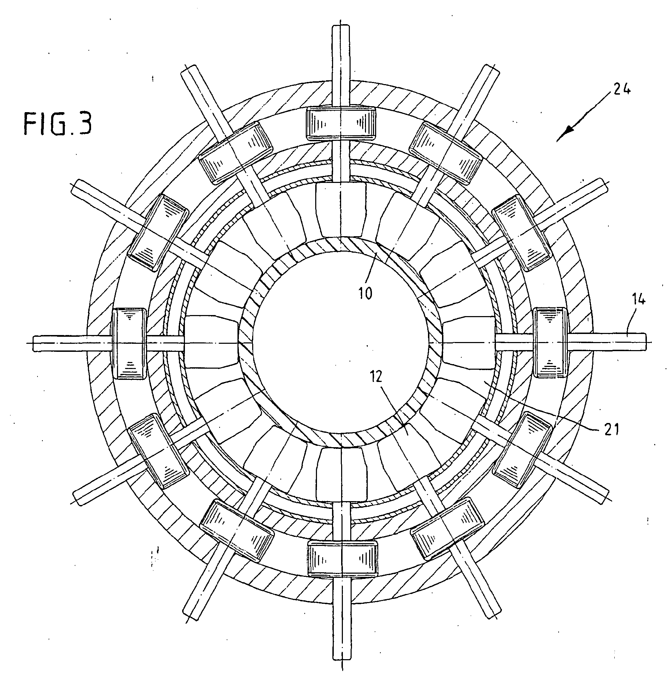

Fig. 3 zeigt in größerem Maßstab den sich in der Kalibrierstation 3 befindenden Kalibrierkorb 24. Hier sind Kalibrierleisten 12 an Verstellspindeln 14 angeordnet, wobei die Verstellung der Kalibrierleisten 12 motorisch, hydraulisch oder auch von Hand erfolgen kann. Die Kalibrierleisten 12 sind in einem Ringraum 21 angeordnet, der dadurch unter Vakuum oder Überdruck steht, daß dieser Raum 21 zum Inneren der Saug- oder Druckglocke 2 offen ist. Das in dieser Glocke 2 herrschende Vakuum oder der hier herrschende Druck herrscht also auch im Inneren des Ringraumes 21 des Kalibrierkorbes 24.

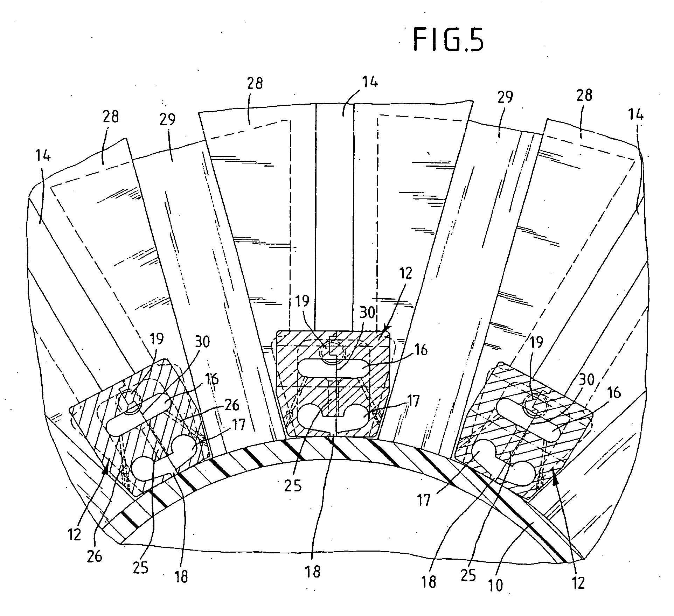

Zum Vakuumkalibrierbad 4 hin ist das Innere des Kalibrierkorbes 24 durch eine Blendendichtung abgeschlossen, die nachfolgend unter Bezugnahme auf Fig. 5 noch erläutert werden wird.

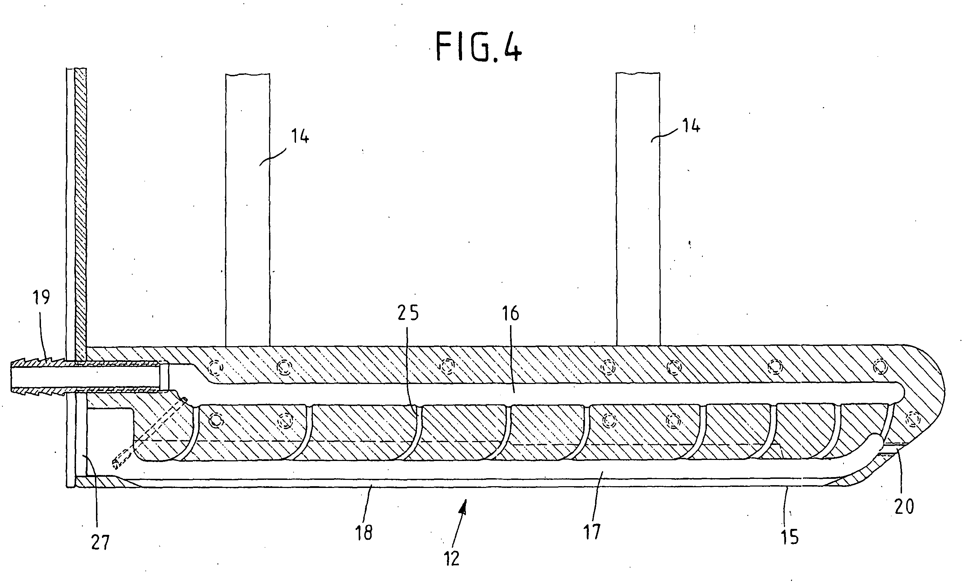

Die Kalibrierleisten 12 sind - wie dies Fig. 4 zeigt - langgestreckt ausgebildet und weisen in ihrem Inneren zwei langgestreckte Ausnehmungen 16 und 17 auf und an ihrer Unterseite eine Gleitfläche 15.

Mit der im Inneren der Kalibrierleiste 12 angeordneten Ausnehmung 16 steht eine Wasserzuführung 19 in Verbindung, die einerseits für eine Wasserkühlung der Kalibrierleiste 12 Sorge trägt, zum anderen aber auch einen Wasserfilm auf das zu kalibrierende Rohr 10 dadurch aufbringt, daß in der Kalibrierleiste 12 Kanäle 25 ausgearbeitet sind, die eine Verbindung zwischen der Ausnehmung 16 und der Ausnehmung 17 herstellen. Hierdurch wird das bei der Wasserzuführung 19 zugeführte Wasser der Oberseite des Rohres 10 dadurch zugeführt, daß in der Gleitfläche 15 eine Ausnehmung 18 angeordnet ist, die bei der in Fig. 4 dargestellten Ausführungsform als durchgehender Schlitz ausgebildet ist, aber genauso gut aus einer Vielzahl aufeinanderfolgender Bohrungen oder Ähnlichem bestehen kann.

Weiterhin ist die Kalibrierleiste 12 mit einer Zutrittsöffnung 27 für das in dem Vakuumkalibrierbad 4 herrschende Vakuum ausgerüstet, wobei dieses Vakuum sich also auch in der Ausnehmung 17 befindet und zusammen mit dem Wasser durch die Austrittsöffnung 18 auf die Oberfläche des Rohres 10 austreten kann. Um dieses Vakuum zu regulieren, kann in der Kalibrierleiste eine Druckregelbohrung 20 vorgesehen sein, die eine Verbindung zum Inneren der Ausnehmung 17 schafft.

Wie bereits anhand von Fig. 3 erläutert, wird jede Kalibrierleiste 12 von zwei Verstellspindeln 14 getragen.

Die Kalibrierleisten 12 selbst sind vorzugsweise zweiteilig in Längsrichtung gesehen ausgebildet, so daß ein leichtes Einarbeiten der entsprechenden Bohrungen und Öffnungen möglich ist. Die Zweiteilung in Längsachse der Kalibrierleiste 12 gesehen ist deutlicher in Fig. 5 dargestellt, wobei die Teilungslinie 30 diese Teilung in Längsachse verdeutlicht.

Fig. 5 zeigt eine Ansicht auf einen Schnitt durch die Kalibrierleiste 12, wobei der Wasserzulauf 19 erkennbar ist ebenso die Ausnehmungen 16 und 17 sowie die diese beiden Ausnehmungen 16 und 17 verbindenden Kanäle 25 und die Austrittsöffnung 18, mit der die Kalibrierleiste 12 an der Außenseite des Rohres 10 anliegt.

Hierbei trägt die Kalibrierleiste 12 fest eine Blende 28, die mit einer weiteren Blende 29 zusammenwirkt, die bei dem dargestellten Ausführungsbeispiel hinter der Blende 28 liegt. Die Blenden 28 der Kalibrierleisten bilden also eine erste Fläche und die Blenden 29 bilden eine zweite Blendenfläche, die aneinanderliegen und ggf. sogar mit Wasser besprüht eine Abdichtung des Kalibrierkorbes gegenüber dem Inneren des Vakuumkalibrierbades 4 bewirken.

### Bezugszeichenliste

- 1: Extruder
- 2: Vakuumsaug-oder Druckglocke
- 3: Kalibrierstation
- 4: Vakuumkalibrierband
- 5: Vakuumanschluss
- 6: Wasserzulauf
- 7: Wasserabfluss
- 8: Vakuumanschluss
- 9: Vakuumabdichtung
- 10: Rohr
- 11: Stützrollen
- 12: Kalibrierleisten
- 14: Stellspindel
- 15: Gleitfläche
- 16: Ausnehmung
- 17: Ausnehmung
- 18: Austrittsöffnung
- 19: Wasserzulauf
- 20: Druckregelbohrung
- 21: Ringraum
- 24: Kalibrierkorb
- 25: Kanäle
- 26: Wasserkanäle
- 27: Zutrittsöffnung
- 28: Blenden
- 29: Blenden
- 30: Teilungslinie

## Patentansprüche

1. Kalibrierkorb für eine Kalibrierstation (3) bei einer Vorrichtung zur Herstellung von Kunststoffrohren (10) mit über den Umfang des Rohres (10) aufeinanderfolgend im Abstand voneinander angeordneten Kalibrierwerkzeugen, die an Verstellspindeln (14) radial einstellbar angeordnet sind und je eine mit dem Rohr (10) in Kontakt kommende Gleitfläche (15) aufweisen, wobei der Kalibrierkorb (24) in der Kalibrierstation (3) drehbar gelagert und in Rotation um das Rohr (10) versetzbar ist, **dadurch gekennzeichnet, dass** die Kalibrierwerkzeuge als sich in Längsrichtung des zu kalibrierenden Rohres (10) erstreckende Kalibrierleisten (12) ausgebildet sind, wobei innerhalb der Kalibrierleiste (12) Ausnehmungen (16, 17) vorgesehen sind, die mit in der Gleitfläche (15) vorgesehenen, in Längsachse der Kalibrierleiste (12) verlaufenden Austrittsöffnungen (18) in Verbindung stehen.

2. Kalibrierkorb nach Anspruch 1, **dadurch gekennzeichnet, dass** die Ausnehmung (16) mit einem Wasserzulauf (19) in Verbindung steht.

3. Kalibrierkorb nach Anspruch 1 oder 2, **dadurch gekennzeichnet, dass** die Ausnehmung (17) mit einer Vakuumquelle in Verbindung steht.

4. Kalibrierkorb nach Anspruch 3, **dadurch gekennzeichnet, dass** die Ausnehmung (17) mit dem Vakuum eines Vakuumkalibrierbades (4) in Verbindung steht.

5. Kalibrierkorb nach einem oder mehreren der vorhergehen den Ansprüche, **dadurch gekennzeichnet, dass** die Kalibrierleisten (12) in einem druckdichten Ringraum (21) angeordnet sind.

6. Kalibrierkorb nach Anspruch 5, **dadurch gekennzeichnet, dass** in dem Ringraum (21) ein Vakuum oder Überdruck einstellbar ist.

7. Kalibrierkorb nach Anspruch 6, **dadurch gekennzeichnet, dass** der Ringraum (21) mit dem Vakuum einer Vakuumsaug-oder Druckglocke (2) in Verbindung steht.

8. Kalibrierkorb nach Anspruch 4 oder 5, **dadurch gekennzeichnet, dass** in dem Ringraum (21) ein niedrigeres Vakuum als in der Ausnehmung (17) einstellbar ist.

9. Kalibrierkorb nach einem oder mehreren der vorhergehenden Ansprüche, **dadurch gekennzeichnet, dass** die Ausnehmungen (16,17) miteinander über Kanäle (25) in Verbindung stehen.

10. Kalibrierkorb nach einem oder mehreren der vorhergehenden Ansprüche, **gekennzeichnet durch** in den Kalibrierleisten (12) ausgebildete, mit der Ausnehmung (16) in Verbindung stehende und oberhalb der Gleitfläche (15) in Seitenwänden der Kalibrierleiste (12) mündende Wasserkanäle (26).

11. Kalibrierkorb nach Anspruch 1, **dadurch gekennzeichnet, dass** die Austrittsöffnung (18) als durchgehender Schlitz oder als aufeinanderfolgende Bohrungen ausgebildet ist.

12. Kalibrierkorb nach einem oder mehreren der vorhergehenden Ansprüche, **dadurch gekennzeichnet, dass** die Kalibrierstation an ihrer Einlaufseite mit dem in der Vakuumsaug-oder Druckglocke herrschenden Vakuum oder Überdruck in Verbindung steht und anderenendes gegenüber dem in dem Vakuumkalibrierbad (4) herrschenden Vakuum abgedichtet ist, aber die Ausnehmung (17) in jeder Kalibriedeiste (12) über eine Zutrittsöffnung (27) mit dem Vakuumkalibrierbad (4) in Verbindung steht.

13. Kalibrierkorb nach einem oder mehreren der vorhergehenden Ansprüche, **dadurch gekennzeichnet, dass** die Ausnehmung (17) in der Kalibrierleiste (12) eine Druckregelbohrung (20) aufweist.

14. Kalibrierkorb nach Anspruch 12, **dadurch gekennzeichnet, dass** die Abdichtung des Kalibrierkorbes (24) gegenüber dem Inneren des Vakuumkalibrierbades (4) über eine Blendendichtung erfolgt, die durch sich überlappende Blenden (28,29) gebildet wird, wobei die eine Blendenserie (z. B. 28) mit der Kalibrierleiste (12) fest verbunden ist.

15. Verfahren zur Kalibrierung eines Kunststoffrohres mit dem in einer Kalibrierstation (3) drehbar angeordneten Kalibrierkorb (24), gemäß Anspruch 1, wobei die Kalibrierung des Rohres (10) im Kontaktbereich des Rohres (10) mit den Kalibrierleisten (12) unter Zugabe von Wasser und unter Einwirkung von Vakuum erfolgt.

16. Verfahren nach Anspruch 15, **dadurch gekennzeichnet, dass** die Zugabe des Wassers im Bereich der Gleitfläche der Kalibrierleiste (12) erfolgt.

17. Verfahren nach Anspruch 15 oder 16, **dadurch gekennzeichnet, dass** zusätzlich eine Wasserzuführung im Bereich der Seitenwände der Kalibrierleiste (12) erfolgt, wobei das Wasser bei der Rotation des Kalibrierkorbes (24) auf die Außenseite des unter die Kalibrierleiste (12) einlaufendes Rohres (10) bzw. auf die Außenseite des von der Kalibrierleiste (12) ablaufenden Rohren (10) aufgebracht wird.

18. Verfahren nach einem oder mehreren der vorhergehenden Ansprüche 15 bis 17, **dadurch gekennzeichnet, dass** auch außerhalb der Kalibrierleisten ein Vakuum auf die Außenseite des Rohres zur Einwirkung gebracht wird.

## Claims

1. A calibration cage for a calibrating station (3) with a device for producing plastic tubes (10) with calibrating tools arranged spaced from each other in succession over the circumference of the tube (10), which are arranged radially adjustable on adjusting spindles (14) and each comprises a sliding surface (15) coming into contact with the tube (10), wherein the calibration cage (24) is rotatably mounted in the calibrating station (3) and can be made to rotate about the tube (10), **characterized in that** the calibrating tools are designed as calibrating strips (12) extending in longitudinal direction of the tube (10) to be calibrated, wherein within the calibrating strip (12) recesses (16, 17) are provided, which are in connection with outlet openings (18) provided in the sliding surface (15) and running in longitudinal axis of the calibrating strip (12).

2. The calibration cage according to claim 1, **characterized in that** the recess (16) is in connection with a water inflow (19).

3. The calibration cage according to claim 1 or 2, **characterized in that** the recess (17) is in connection with a vacuum source.

4. The calibration cage according to claim 3, **characterized in that** the recess (17) is in connection with a vacuum of a vacuum calibrating bath (4).

5. The calibration cage according to any one or several of the preceding claims, **characterized in that** the calibrating strips (12) are arranged in a pressure-tight annular space (21).

6. The calibration cage according to claim 5, **characterized in that** in the annular space (21) a vacuum or overpressure is adjustable.

7. The calibration cage according to claim 6, **characterized in that** the annular space (21) is in connection with a vacuum of a vacuum suction or pressure bell (2).

8. The calibration cage according to claim 4 or 5, **characterized in that** in the annular space (21) a lower vacuum then in the recess (17) can be adjusted.

9. The calibration cage according to any one or several of the preceding claims, **characterized in that** the recess (16, 17) are in connection with one another via channels (25).

10. The calibration cage according to any one or several of the preceding claims, **characterized by** water channels (26) formed in the calibrating strips (12), being in connection with the recess (16) and terminating above the sliding surface (15) in side walls of the calibrating strip (12).

11. The calibration cage according to claim 1, **characterized in that** the outlet opening (18) is designed as a continuous slit or as bores in succession.

12. The calibration cage according to any one or several of the preceding claims, **characterized in that** the calibrating station at its inlet side is in connection with the vacuum or overpressure prevailing in the vacuum suction or pressure bell and on the other end is sealed against the vacuum prevailing in the vacuum calibrating bath (4), but the recess (17) is in connection with a vacuum calibrating bath (4) in each calibrating strip (12) via an access opening (27).

13. The calibration cage according to any one or several of the preceding claims, **characterized in that** the recess (17) in the calibrating strip (12) has a pressure control bore (20).

14. The calibration cage according to claim 12, **characterized in that** the sealing of the calibration cage (24) against the interior of the vacuum calibrating bath (4) is effected via a shutter seal which is formed through overlapping shutters (28, 29), wherein the one shutter series (e.g. 28) is connected to the calibrating strip (12) in a fixed manner.

15. A method for calibrating a plastic tube with the calibration cage (24) rotatably arranged in a calibrating station (3) according to claim 1, wherein the calibration of the tube (10) takes place in the contact region of the tube (10) with the calibrating strips (12) subject to the addition of water and under the effect of vacuum.

16. The method according to claim 15, **characterized in that** the addition of the water takes place in the region of the sliding surface of the calibrating strip (12).

17. The method according to claim 15 or 16, **characterized in that** additionally a water feed takes place in the region of the side walls of the calibrating strip (12), wherein the water upon the rotation of the calibration cage (24) is applied to the outside of the tube (10) entering under the calibrating strip (12) or to the outside of the tube (10) running off the calibrating strip (12).

18. The method according to any one or several of the preceding claims 15 to 17, **characterized in that** a vacuum is also made to act on the outside of the tube outside the calibrating strips.

## Revendications

1. Panier de calibrage pour un poste de calibrage (3) sur une installation pour la fabrication de tubes plastiques (10) avec des outils de calibrage disposés de manière espacée à la suite les uns des autres sur le pourtour du tube (10), lesquels sont disposés de manière réglable radialement sur des broches de réglage (14) et présentent respectivement une surface de glissement (15) arrivant en contact avec le tube (10), le panier de calibrage (24) étant monté de manière rotative dans le poste de calibrage (3) et pouvant être décalé en rotation autour du tube (10), **caractérisé en ce que** les outils de calibrage sont réalisés en tant que barres de calibrage (12) s'étendant en direction longitudinale du tube (10) à calibrer, des évidements (16, 17) étant prévus à l'intérieur d'une barre de calibrage (12), lesquels sont en liaison avec des orifices de sortie (18) prévus dans la surface de glissement (15) et s'étendant le long de l' axe longitudinal de la barre de calibrage (12).

2. Panier de calibrage selon la revendication 1, **caractérisé en ce que** l'évidement (16) est en liaison avec une arrivée d'eau (19).

3. Panier de calibrage selon la revendication 1 ou 2, **caractérisé en ce que** l'évidement (17) est en liaison avec une source de vide.

4. Panier de calibrage selon la revendication 3, **caractérisé en ce que** l'évidement (17) est en liaison avec le vide d'un bain de calibrage sous vide (4).

5. Panier de calibrage selon l'une ou plusieurs des revendications précédentes, **caractérisé en ce que** les barres de calibrage (12) sont disposées dans un espace annulaire étanche à la pression (21).

6. Panier de calibrage selon la revendication 5, **caractérisé en ce que** l'on peut régler un vide ou une surpression dans l'espace annulaire (21).

7. Panier de calibrage selon la revendication 6, **caractérisé en ce que** l'espace annulaire (21) est en liaison avec le vide d'une cloche d'aspiration ou de pression sous vide (2).

8. Panier de calibrage selon la revendication 4 ou 5, **caractérisé en ce que** l'on peut régler dans l'espace annulaire (21) un vide plus faible que dans l'évidement (17).

9. Panier de calibrage selon l'une ou plusieurs des revendications précédentes, **caractérisé en ce que** les évidements (16, 17) sont en liaison les uns avec les autres via des canaux (25).

10. Panier de calibrage selon l'une ou plusieurs des revendications précédentes, **caractérisé par** des canaux d'eau (26) réalisés dans les barres de calibrage (12) qui sont en liaison avec les évidements (16) et débouchent au-dessus de la surface de glissement (15) dans des parois latérales de la barre de calibrage (12).

11. Panier de calibrage selon la revendication 1, **caractérisé en ce que** l'orifice de sortie (18) est réalisé en tant que fente d'un seul tenant ou en tant que perçages à la suite les uns des autres.

12. Panier de calibrage selon l'une ou plusieurs des revendications précédentes, **caractérisé en ce que** le poste de calibrage est en liaison sur un de ses côtés d'entrée avec le vide ou la surpression qui règne dans la cloche d'aspiration ou de pression sous vide et est rendu étanche à l'autre extrémité par rapport au vide qui règne dans le bain de calibrage sous vide (4), l'évidement (17) dans chaque barre de calibrage (12) étant cependant en liaison avec le bain de calibrage sous vide (4) via un orifice d'entrée (27).

13. Panier de calibrage selon l'une ou plusieurs des revendications précédentes, **caractérisé en ce que** l'évidement (17) dans la barre de calibrage (12) présente un trou de réglage de pression (20).

14. Panier de calibrage selon la revendication 12, **caractérisé en ce que** l'étanchéité du panier de calibrage (24) par rapport à l'intérieur du bain de calibrage sous vide (4) s'effectue par l'intermédiaire d'un obturateur d'étanchéité, lequel est formé par des obturateurs (28, 29) en superposition, l'une des séries d'obturateurs (par exemple 28) étant reliée de manière serrée à la barre de calibrage (12).

15. Procédé pour le calibrage d'un tube en plastique avec le panier de calibrage (24) disposé de manière rotative dans le poste de calibrage (3) selon la revendication 1, le calibrage du tube (10) s'effectuant dans la zone de contact du tube (10) avec les barres de calibrage (12) par ajout d'eau et sous l'effet d'un vide.

16. Procédé selon la revendication 15, **caractérisé en ce que** l'ajout d'eau a lieu dans la zone de la surface de glissement de la barre de calibrage (12).

17. Procédé selon la revendication 15 ou 16, **caractérisé en ce qu'**il a de manière supplémentaire une amenée d'eau dans la zone des parois latérales de la barre de calibrage (12), l'eau étant alimentée lors de la rotation du panier de calibrage (24) sur le côté extérieur du tube (10) arrivant sous la barre de calibrage (12) et/ou sur le côté extérieur du tube (10) partant de la barre de calibrage (12).

18. Procédé selon l'une ou plusieurs des revendications 15 à 17 précédentes, **caractérisé en ce que** l'on fait également s'exercer un vide à l'extérieur des barres de calibrage sur le côté extérieur du tube.
